# EUROPEAN PATENT APPLICATION

(11) **EP 0 817 460 A2**
(43) Date of publication of application: **07.01.1998**
(21) Application number: 97304017.3
(22) Date of filing: 10.06.1997
(51) Int. Cl.: H04N 1/04

(54) **Document feeding apparatus**

(30) Priority: 24.06.1996 KR 9623332
(71) Applicant: Samsung Electronics Co., Ltd., Suwon City, Kyungki-do 442-370 (KR)
(72) Inventor: Ahn, Byung-Sun, Kweonseon-gu, Suwon-city, Kyungki-do (KR)
(74) Representative: Tunstall, Christopher Stephen

(57) **Abstract**

A document feeding apparatus for feeding a document comprises at least one roller (16, 17, 18, 48,49, 49a, 50, 50a) for conveying sheets (15,47) of a document, a motor gear (1, 31) for providing drive to rotate the roller (16, 17, 18, 48, 49, 49a, 50, 50a); and a gear system adapted to transmit drive from the motor gear rotating at a substantially constant speed to the roller (16, 17, 18, 48, 49, 49a, 50, 50a) and to cause the roller (16, 17, 18, 48, 49, 49a, 50, 50a) to rotate at one of two or more speeds whereby the speed of rotation of the roller depends on the direction of rotation of the motor gear. Thus, the motor is driven at the same optimum speed whatever transmission mode, fine or normal, is selected.

## Description

### BACKGROUND OF THE INVENTION

The present invention relates to a document feeding apparatus and, more particularly, to a document feeding apparatus which alleviates noise and resonance due to mechanical abrasion and vibration when a document is conveyed in an apparatus such as facsimile system.

In an apparatus for transmitting the data on a document, such as facsimile system, when a document sheet is loaded onto a document feeder of an automatic feeding device in order to transmit the data, a sensor is operated to sense if the document is loaded, and a feed roller rotates, so that a friction pad, located over the document, picks the document up and carries it a predetermined distance before stopping. When the system reaches this state, a user dials a remote counterpart and pushes a start button to transmit the document according to the counterpart's reception condition. Alternatively, the user stores the data on the document in a memory and then performs automatic transmission.

When the start button is pushed, a motor is driven via a central processing unit (CPU) to drive the rollers in the apparatus. That is, an automatic feeding roller conveys the document sheet which has been picked up to a document reading device. When the CPU senses the location of the document sheet, by operating an actuator located at the front edge of a carrying roller set in front of the reading device, the document sheet goes into the carrying roller with regard to the distance between the CPU and carrying roller. Here, the automatic feeding roller stops by operating a clutch located on the shaft of the automatic feeding roller, and the feeding roller is free to rotate under only the effect of friction.

In the meantime, the data information from the document which passes through the feeding roller is read by the reading device and transmitted to the counterpart through a modem. Then, the document sheet is ejected out through a delivery roller. When the trailing edge of the document sheet passes a sensor located on the delivery roller, the motor stops for several seconds. In the case of the transmission of several document sheets, when the trailing edge of the document sheet passes the sensor, the clutch of the automatic feeding roller drives the automatic feeding roller to convey the next document sheet.

In a conventional document feeding apparatus, when a user transmits a document, the user selects one of three transmission modes, such as a super fine mode, a fine mode and a normal mode. If the highest resolution is required, the super fine mode is selected. The fine mode is for higher resolution, and the normal mode is for normal resolution. When the higher resolution is required, the reading device takes more time to accurately read the data of the document. Thus, when the document is conveyed on the reading device, the feeding speed of the document should be controlled for reading the data of the document accurately. Accordingly, if the super fine mode or fine mode is set, the motor speed must be considerably lowered. In the normal mode, the motor should be driven at a revolution rate suitable for optimum operation.

Since the feeding apparatus is generally used in the normal mode, the apparatus is driven at a revolution rate suitable for the optimum state condition of the stepping motor used in this feeding apparatus. However, in the fine mode, the apparatus is driven at a revolution rate lower than that in the normal mode. This deviates from the optimum characteristic of the stepping motor. Thus, mechanical abrasion due to violent vibration or noise is generated, and the control of the apparatus is difficult. Moreover, abrasion between gears occurs because of violent vibration, and thus the gap between the gears is increased. Accordingly, the document passes through the reading device at an unsteady speed. This deteriorates the resolution of the received document, and generates jitter on it.

### SUMMARY OF THE INVENTION

An object of the present invention is to provide a document feeding apparatus in which maintenance of the optimum condition of the motor is improved in any mode, to alleviate noise and resonance frequency due to vibration and mechanical abrasion. By improving optimisation of the mechanical condition resolution deterioration and jitter is alleviated.

Another object of the present invention is to provide a document feeding apparatus whose driving motor is rotated clockwise/counterclockwise at the same revolution, thus to reduce mechanical abrasion and noise due to vibration.

There is therefore provided a document feeding apparatus comprising at least one roller (16, 17, 18, 48,49, 49a, 50, 50a) for conveying sheets (15,47) of a document, a motor gear (1, 31) for providing drive to rotate the roller (16, 17, 18, 48, 49, 49a, 50, 50a); and characterised by a gear system adapted to transmit drive from the motor gear rotating at a substantially constant speed to the roller (16, 17, 18, 48, 49, 49a, 50, 50a) and to cause the roller (16, 17, 18, 48, 49, 49a, 50, 50a) to rotate at one of two or more speeds whereby the speed of rotation of the roller depends on the direction of rotation of the motor gear.

Preferably, two drive paths are provided through which drive is transmitted to the roller (16, 17, 18, 48, 49, 49a, 50, 50a), whereby when the motor gear rotates in a given direction one of these drive paths is selected to transmit drive and when the motor gear rotates in the opposite direction the other of the drive paths is selected to transmit drive, the speed of rotation of the roller depending on which of the drive paths is selected.

Preferably, each drive path comprises at least one reduction gear (6, 8, 13) which is engaged to transmit drive when that drive path is selected.

The apparatus may comprise two or more rollers (16, 17, 18, 48, 49, 49a, 50, 50a) for conveying document sheets (15, 47), each roller being driven by the motor gear. For example it may comprise a pick up roller and a first feeder roller for delivering a sheet to a read position are driven by the motor gear and preferably a delivery roller for conveying a sheet from the read position driven by motor gear.

In a preferred embodiment the gear system comprises a swing gear (4) arranged to swing between two drive positions in each of which a drive path is selected and in which the swing gear (4) can transmit drive along the selected drive path. Preferably, the swing gear acts upon differently sized reduction gears (6, 13) in different drive positions.

The swing gear (4) may move to one drive position or another depending upon the direction of the tangential force of revolution of the motor gear (1). For example, the swing gear (4) may be pivotally mounted on a gear (2) driving it so that it is caused to move to one or other of the drive positions depending on the direction of rotation and hence the tangential force developed on that gear (2).

Preferably, the swing gear is arranged so that a tension spring (5) positioned on a swing arm (3) pivoting the swing gear causes the swing gear (4) to be positioned between drive positions in an initial state when the motor gear (1) is not rotating.

The swing gear (4) may engage with a two stage reduction gear (2) which receives power from the motor gear. Preferably, one of the gears of a first two-stage reduction gear (6) engages with and is driven by the swing gear in one drive position and the other of the gears of the first two-stage reduction gear (6) engages with a pick-up gear for driving a pick up roller for picking up a document sheet (15). Preferably, the pick-up gear (7) engages with one of the gears of a second two-stage reduction gear (8) and the other of the gears of the second two-stage reduction gear (8) engages with a feeding gear for driving a feed roller.

Preferably one of the gears of the second two-stage second reduction gear (8) engages with an idle gear (10) for transmitting drive to a delivery roller (18). A side of the idle gear (10) may engage with a second idle gear (12) which engages and drives the delivery roller (18). Another side of the idle gear (10) may transmits drive to one or more further idle gears (11, 13) in this drive position.

In a preferred embodiment the apparatus comprises a stepping motor and, when the stepping motor rotates clockwise, say, the two-stage reduction gear (2) rotates counterclockwise and moves the swing gear upward to engage with the first reduction gear (6), when the stepping motor rotates counterclockwise, the two-stage reduction gear (2) rotates clockwise and moves the swing gear downward to engage with the third reduction gear (13).

In a further preferred embodiment, the gear system comprises one or more clutches arranged so that one or other of the drive paths is selected for driving the roller depending on the direction of rotation of the motor gear. Preferably, one or more spring clutches are provided. Preferably, the one or more clutches causes differently sized reduction gears to be engaged depending on the drive path selected. Preferably, a power transmission gear (32) having spring clutches positioned either side thereof is provided and the drive path selected depends on the direction of rotation of the gear (32).

Preferably, a gear (33) used in a normal mode is set on one side of the power transmission gear (32) delivering power from the motor gear (1), a gear (36) used in a fine mode is set on the other side of the power transmission gear (32), the gear used for normal mode being driven when the motor gear rotates one way, the gear used for fine mode being driven when the stepping motor rotates the other way.

Preferably, the two gears (33, 36) are differently sized from one another and/or further gears (38, 39, 42, 55, 43) are provided which are of differing sizes from one drive path to the other.

Preferably, the gear (32) comprises two hubs (32a, 32b) one on either side which rotate with the clutch gear, and in which two gears (33, 36) having hubs (33a, 36a) are provided positioned rotatably opposite the respective transmission gear hubs (32a, 32b), two spring clutches (35, 37) being positioned about each pair of opposing hubs (32a, 33a and 32b, 36a) the spring clutches being wound in the directions different from each other, so that power is delivered to one of the two gears (33, 36) according to the revolution direction of the power transmission gear, two gears (33, 36) and the spring clutches whilst the other gear is idle, and vice versa so that drive is transmitted through one or other of the two gears (33, 36)

Preferably, one of the gears (33) engages with a two-stage reduction gear (38).

Preferably, one of the gears of the two-stage reduction gear (38) is engaged with an idle gear (39) which engages with a pick-up gear for driving a feed roller for picking up a document sheet (47).

Preferably, one side of the idle gear (39) engages with a feeding gear on which a feeding roller is set.

Preferably, another of the two gears (36) engages with a first idle gear (42) which engages a fourth idle gear (55).

Preferably, the fourth idle gear (55) engages a second idle gear (43) a side of which engages one gear of a two-stage reduction feeding gear (41), the other gear of feeding gear (41) engaging with a third idle gear (44) for driving a delivery roller.

In a preferred embodiment, a stepping motor is provided and when it rotates one way, the spring clutch set on one hub of the power transmission gear (32) delivers power to the gear used for normal mode, and the spring clutch set on the other hub is released so that power is not delivered to the gear used for fine mode, the gear used for fine mode being idle. Preferably, when the stepping motor rotates the other way, the spring clutch set on the other hub of the power transmission gear (32) delivers power to the gear used for fine mode, and the spring clutch set on one hub is released so that power is not delivered to the gear used for normal mode, the gear used for normal mode being idle.

In a preferred embodiment, to speed up the document feeding speed to a read position in a high resolution mode, the motor gear is rotated at a first high speed until a document reaches the read position where a sensor determines the document has reached the reading position and the motor gear is then reversed so that the document is read at a second lower speed.

Preferably, the stepping motor rotates clockwise or counterclockwise at the same revolution rate.

In a further aspect of the invention there is provided a facsimile system comprising a document feeding apparatus for transmitting data from a document as described above and further comprising a feed roller for feeding sheets of a document, a document sensor for sensing if the document sheet is loaded, a reading device for reading the data of the document and for converting the data into a digital signal, a feeding roller for feeding the document sheet to the reading device and a register sensor located before the reading device, whereby the document sheet is conveyed by the power transmission gear system by driving a driving motor gear clockwise or counterclockwise at a constant revolution rate in each document speed transmission mode.

Preferably, a reading device is located between the feeding roller and delivery roller, a register sensor is set in front of the reading device, a friction pad and document sensor are set on the feed roller.

Preferably, the facsimile can operated to speed up the document feeding speed to the reading device even in the initial fine mode, the driving motor is rotated at the revolution rate of the normal state, the register sensor installed in front of the reading device is operated, and then the normal state is converted into the fine mode, to drive the motor.

In an automatic document feeding apparatus of the present invention, a document sensor senses if the document is loaded or not, and a feed roller and friction pad pick up the document sheet one by one. A register sensor arranges the document sheet on a feeding roller. A reading device reads the data of the information of the document, converts analog data into a digital signal, and transmits the digital signal to a counterpart through a modem. A delivery roller out off the document sheet, and a delivery sensor senses if the document sheet is out or not. A stepping motor drives the rollers. The stepping motor rotates clockwise or counterclockwise at the same revolution rate, and thus driving gears of the apparatus is rotated at a revolution of the optimum condition at any mode.

The stepping motor rotates counterclockwise in the fine mode, and it rotates clockwise in the normal mode, at the same revolution rate. A plurality of gears are set in order to convey the document sheet by the reading device at a speed suitable for the fine mode or normal mode. A power converting apparatus using a tension gear or spring clutch is set on the gear teeth of the driving gear before each gear is separated into each roller. When the stepping motor rotates clockwise or counterclockwise according to the mode, the speed of each roller is controlled by the speed rate of each driving gear, and the reading device controls the feeding speed, by converting the driving of the tension swing gear or power converting apparatus.

### BRIEF DESCRIPTION OF THE DRAWINGS

The invention will now be described in more detail by way of example only with reference to the accompanying drawings, in which like reference symbols indicate the same or similar components.
FIG. 1 shows a document feeding apparatus according to a first embodiment of the present invention.
FIG. 2 shows a document feeding apparatus in the normal mode according to the first embodiment of the present invention.
FIG. 3 shows a document feeding apparatus in fine mode according to the first embodiment of the present invention.
FIG. 4 shows a document feeding apparatus according to a second embodiment of the present invention.
FIG. 5 shows a document feeding apparatus in the normal mode according to the second embodiment of the present invention.
FIG. 6 shows a document feeding apparatus in fine mode according to the second embodiment of the present invention.
FIG. 7A shows the state when a spring clutch winds clockwise one hub of a power transmission gear of the apparatus in FIG. 4, and
FIG. 7B shows the state when the spring clutch winds counterclockwise the other hub of a power transmission gear of the apparatus in FIG. 4.

### DETAILED DESCRIPTION OF THE PREFERRED EMBODIMENTS

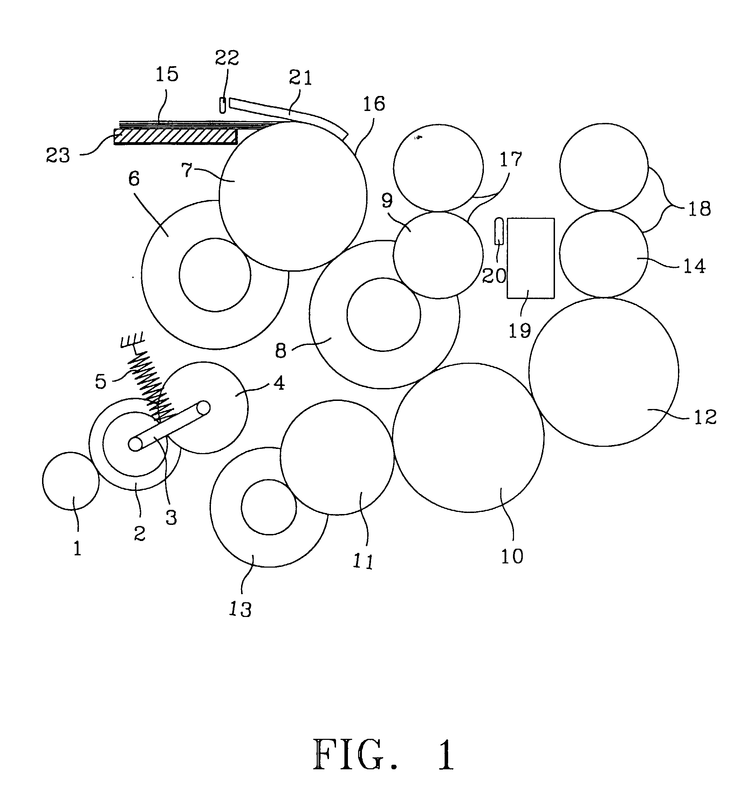

In FIG. 1, an automatic document feeding apparatus for transmitting the information of the document, such as facsimile system, is shown. A two-stage reduction gear 2 is engaged with a swing gear 4 to which a swing arm 3 is connected. Reduction gear 2 receives power from the gear of a stepping motor 1 which rotates clockwise or counterclockwise. A tension spring 5 is set on swing arm 3.

A first two-stage reduction gear 6 is located over swing gear 4. The smaller gear of first two-stage reduction gear 6 is engaged with a pick-up gear 7 on which a feed roller 16 picking up a document sheet 15 is set. Pick-up gear 7 is engaged with a second two-stage reduction gear 8 at the bottom of the pick-up gear. The smaller gear of second reduction gear 8 is engaged with a feeding gear 9. Upper and lower feeding rollers 17 are set on feeding gear 9.

The larger gear of second reduction gear 8 is engaged with an idle gear 10. One side of idle gear 10 is engaged with a first idle gear 11, and the other side is engaged with a second idle gear 12. First idle gear 11 is engaged with a third reduction gear 13. Swing gear 4 is selectively engaged with third idle gear 13. Second idle gear 12 is engaged with a delivery gear 14 on which a delivery roller 18 is set.

A reading device 19 is set between feeding roller 17 and delivery roller 18. A register sensor 20 is located on reading device 19. A friction pad 21 is located on feed roller 16, and a document sensor 22 is located over the feed roller.

A document 15 is loaded on a document feeder 23, and at the same time, located on feed roller 16. When stepping motor 1 rotates clockwise, two-stage reduction gear 2 rotates counterclockwise and moves swing gear 4 upward to engage with first reduction gear 6. When stepping motor rotates counterclockwise, two-stage reduction gear 2 rotates clockwise and moves swing gear 4 installed on swing arm 3 downward to engage with third reduction gear 13.

The operation and effect of the above-described document feeding apparatus of the present invention will be explained below.

When document 15 is loaded on document feeder 23, document sensor 22, which senses if document 15 is loaded, is operated. Feed roller 16 picks up one sheet of the document and carries it a predetermined distance by friction pad 21. Simultaneously, a counterpart is dialled, and a start button is pushed in the normal mode state.

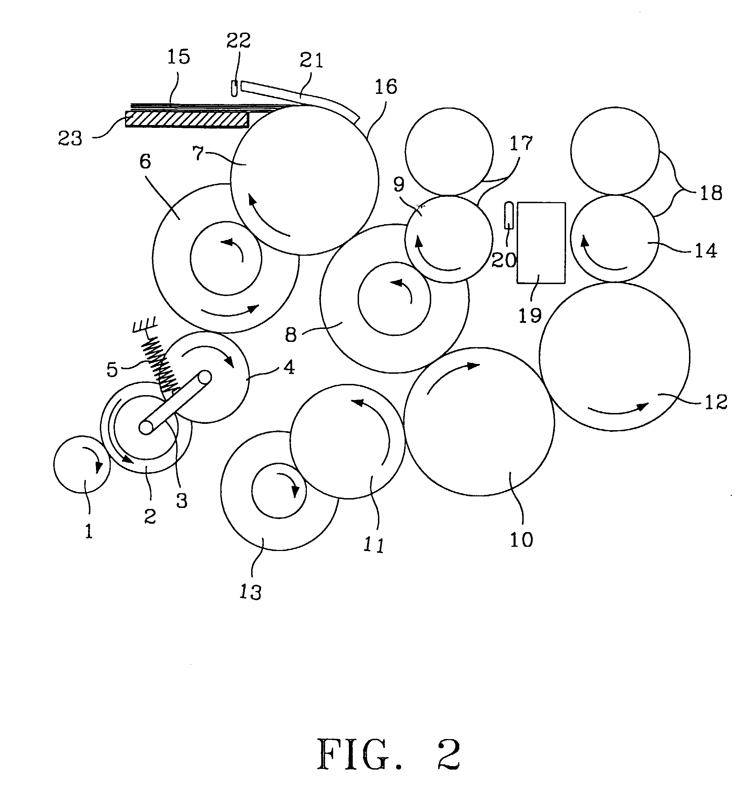

When the start button is pushed in the normal mode, stepping motor 1 rotates clockwise as shown in FIG. 2. Two-stage reduction gear 2 connected to the gear of stepping motor 1 is rotated counterclockwise, and swing gear 4 connected to reduction gear 2 through swing arm 3 is rotated clockwise, and moved upward, to be engaged with the larger gear of first reduction gear 6. Since first reduction gear 6 rotates counterclockwise, and pick-up gear 7 connected to the smaller gear of first reduction gear 6 rotates clockwise, feed roller 16 rotates clockwise and carries document sheet 15 to feeding roller 17.

As pick-up gear 7 rotates clockwise, second reduction gear 8 engaged with pick-up gear 7 rotates counterclockwise, and feeding gear 9 rotates clockwise, to thereby drive upper and lower feeding rollers 17. Document sheet 15 passes through feeding roller 17 and is read by reading device 19. Then, the document sheet is conveyed to delivery roller 18. Simultaneously, idle gear 10 engaged with second reduction gear 8 rotates clockwise and second idle gear 12 rotates counterclockwise, so as to rotate delivery gear 14 clockwise. By doing so, document sheet 15 is passed out from delivery roller 18. Here, third reduction gear 13 idles through first idle gear 11 engaged with idle gear 10.

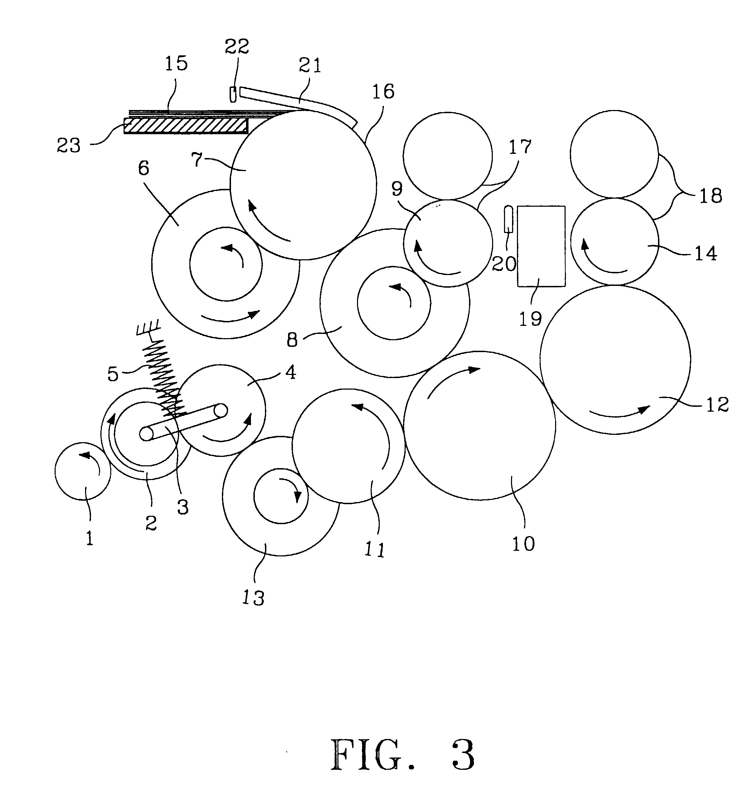

In the situation in which the apparatus is operated in the fine mode in the above-described state, when stepping motor 1 rotates clockwise, as shown in FIG. 3, the leading edge of document sheet 15 passes through feed roller 16 and feeding roller 17. The document sheet is then placed on register sensor 20 which senses document 15 and stops stepping motor 1.

In this state, when the mode is converted into the fine mode, stepping motor 1 rotates counterclockwise and reduction gear 2 engaged with the gear of stepping motor 1 rotates clockwise. Thus, swing gear 4 connected with swing arm 3 is rotated counterclockwise and moved downward, to be engaged with the larger gear of third reduction gear 13. Here, third reduction gear 13 rotates clockwise and first idle gear 11 engaged with the smaller gear of reduction gear 13 rotates counterclockwise to rotate idle gear 10 engaged with first idle gear 11. Second idle gear 12 rotates counterclockwise to rotate delivery gear 14 clockwise. Here, second reduction gear 8, connected to second idle gear 10, rotates counterclockwise to rotate feeding gear 9 engaged with its smaller gear clockwise.

Pick-up gear 7 engaged with second reduction gear 8 rotates clockwise, and first reduction gear 6, which is engaged with it, idles counterclockwise, without transmitting power.

When stepping motor 1 rotates counterclockwise in the fine mode, the driving powers of the reduction gears now in operation to drive feed roller 17 are reduced so as to rotate feeding roller 17 at a reduced rate. Thus, document sheet 15 is passed out through reading device 19 and delivery roller 18.

As described above, since the stepping motor rotates clockwise or counterclockwise at the same rate of revolution, the optimum condition of the motor is maintained in any mode, whilst ensuring the required speed of paper delivery in that mode. Accordingly, it is possible to reduce noise and resonance frequency due to mechanical abrasion and vibration thereby optimising the mechanical condition and alleviating resolution deterioration and jitter.

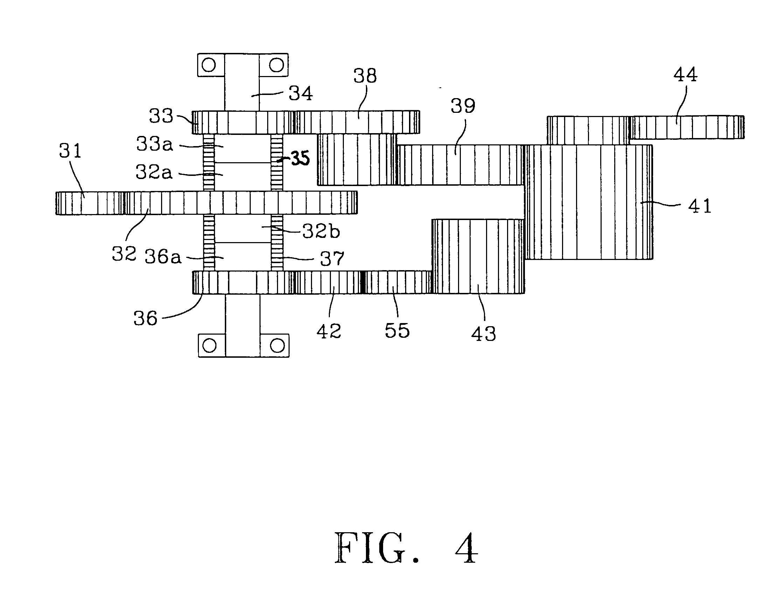

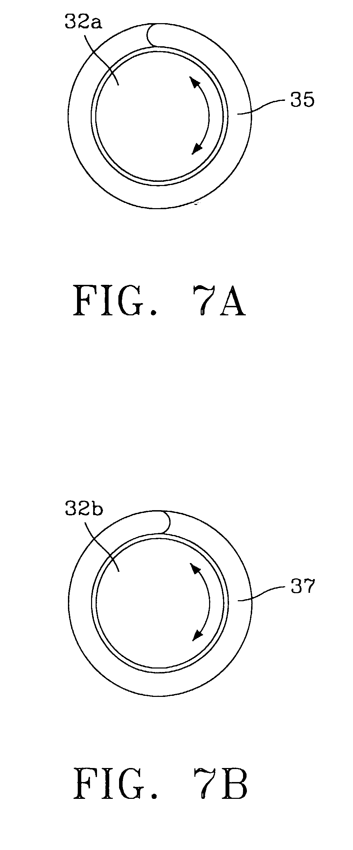

A second embodiment of the present invention will be explained below with reference to Figs. 4 to 7. In an automatic document feeding apparatus in which a document is conveyed to transmit the information of the document, hubs 32a and 32b are set on both sides of a power transmission gear 32 which transmits power from a stepping motor 31. Stepping Motor 31 rotates clockwise or counterclockwise.

A gear 33 used in the normal mode is mounted on a shaft 34. A cylinder 33a is mounted on gear 33 opposite to hub 32a. A spring clutch 35 is positioned between one hub 32a and gear 33 used in the normal mode. Spring clutch 35 is wound clockwise.

A gear 36, used in the fine mode, is mounted on shaft 34. A cylinder 36a is mounted on gear 36 opposite to the other hub 32b of power transmission gear 32. A spring clutch 37 is positioned between the other hub 32b and gear 36 used in the fine mode. Spring clutch 37 is wound counterclockwise.

Gear 33 used for the normal mode engages with a two-stage reduction gear 38. The smaller gear of reduction gear 38 is engaged with an idle gear 39. Idle gear 39 is engaged with a pick-up gear 40 at an upper portion of idle gear 39. Pick-up gear 40 has a feed roller 48 for picking up a document sheet 47. Idle gear 39 is engaged with a feeding gear 41 at a lower portion of idle gear 49. Upper and lower feeding rollers 49 are set on feeding gear 41.

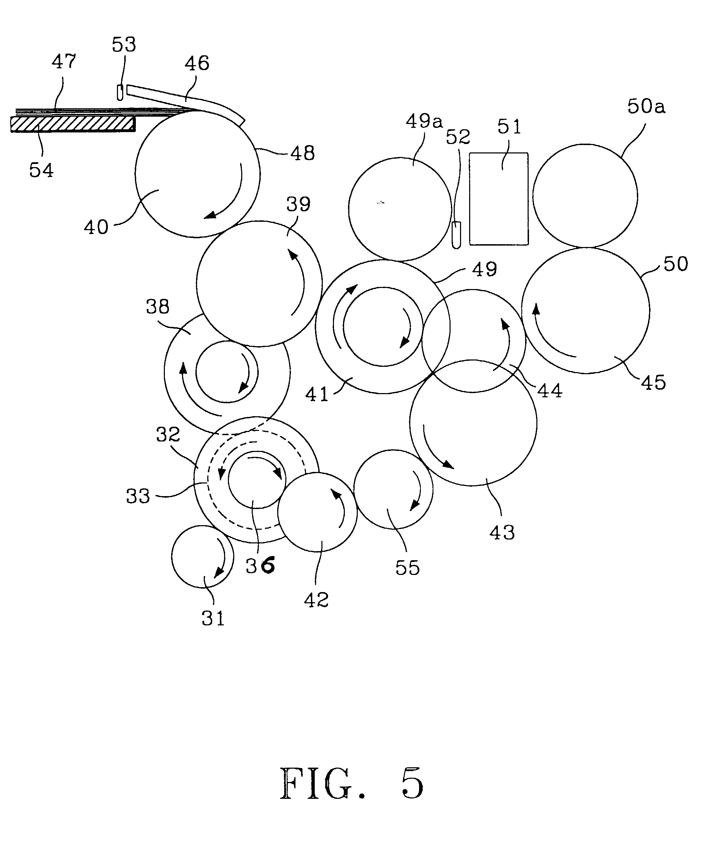

Gear 36, used in the fine mode, is engaged with a first idle gear 42, and one side of first idle gear 42 is engaged with a fourth idle gear 55. Fourth idle gear 55 is engaged with a second idle gear 43. Second idle gear 43 is engaged with the larger gear of feeding gear 41. A third idle gear 44 is engaged with the smaller gear of feeding gear 41. Third idle gear 44 is engaged with a delivery gear 45 on which a delivery roller 50 is set. It can be seen from FIG. 5 that gear 36 which drives idle gear 42 is has a smaller diameter than gear 33 which drives idle gear 38.

Feeding roller 49 is engaged with an upper feeding roller 49a, and delivery roller 50 is engaged with an upper delivery roller 50a. A reading device 51 is set between upper feeding roller 49a and upper delivery roller 50a, and a register sensor 52 is set over reading device 51. A friction pad 46 and document sensor 53 are set on feed roller 40.

Document sheet 47 is loaded on document feeder 54, and at the same time, located on feed roller 48.

When stepping motor 31 rotates clockwise, spring clutch 35, which is set on hub 32a of power transmission gear 31, directly transmits power to gear 33 used in the normal mode. Spring clutch 37 cannot deliver power to gear 36 used for fine mode because it is released. Thus, gear 36 idles.

When stepping motor 31 rotates counterclockwise, power is delivered to gears 33 and 36 by the operation of the spring clutches in an opposite manner to that described above.

The operation and effect of the document feeding apparatus of the present invention will be explained below.

In the document feeding apparatus, when document sheet 47 is loaded on document feeder 54, document sensor 53 senses if document 47 is loaded or not, so that feed roller 48 and friction pad 46 pick up one sheet of document 47 and move it by a predetermined distance. Simultaneously, a counterpart is dialled, and the start button is pushed in the normal mode state. When the start button is pushed, as shown in FIG. 5, stepping motor 31 rotates clockwise for normal mode operation. Power transmission gear 32 connected to the gear of stepping motor 31 is rotated counterclockwise, and spring clutch 35, which winds round hub 32a clockwise, is tightened, so as to tighten cylinder 33a of gear 33 used in the normal mode. Thus, gear 33 is rotated counterclockwise and reduction gear 38 engaged with gear 33 is rotated clockwise. Here, idle gear 39 engaged with the smaller gear of reduction gear 38 is rotated counterclockwise and rotates pick-up gear 40 located thereon. By doing so, feed roller 48 is rotated clockwise, to convey document sheet 47 to feeding roller 49.

Simultaneously, feeding gear 41 engaged with one side of idle gear 39 is rotated clockwise, to thereby drive upper and lower feeding rollers 49 and 49a. Here, document sheet 47 passes through feeding roller 49 and the passed document sheet is read by reading device 51. The document sheet is then carried to delivery roller 50.

At the same time, third idle gear 44 engaged with the smaller gear of feeding gear 41 is rotated counterclockwise and delivery gear 45 engaged with gear 44 is rotated clockwise causing document sheet 47 to be passed out by delivery roller 50. Here, fourth idle gear 55 is rotated clockwise due to second idle gear 43 engaged with the larger gear of feeding gear 41, first idle gear 42 is rotated counterclockwise and gear 36 engaged with gear 42 idles clockwise.

Since spring clutch 37, which is set on hub 32b of power transmission gear 32 and cylinder 36a of gear 36, is wound counterclockwise, spring clutch 37 is released when rotated when gear 36 is rotated clockwise as described above. Thus, gear 36 idles.

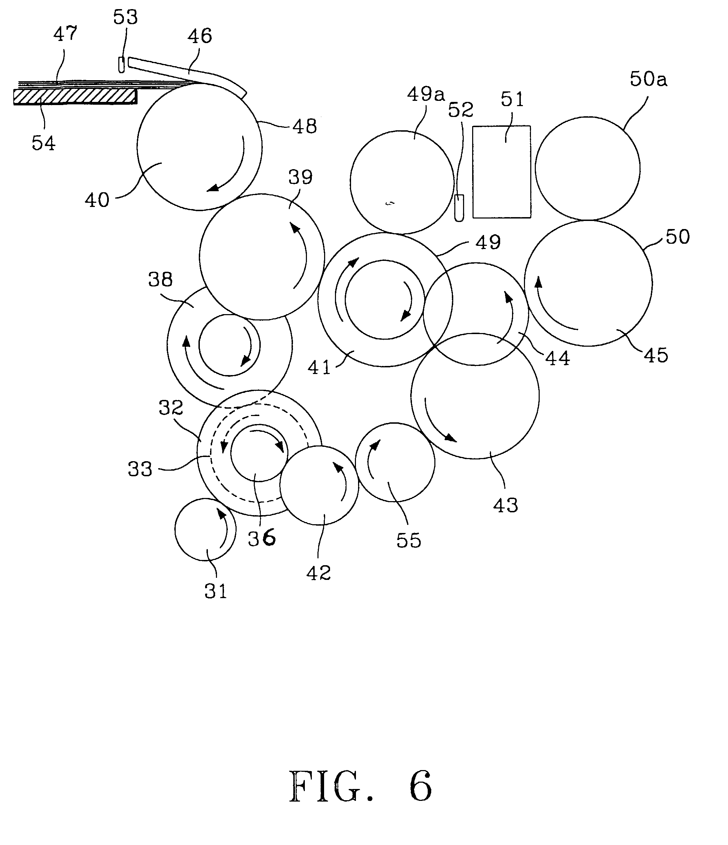

When the apparatus is driven in the fine mode of the aforementioned state, if stepping motor 31 is rotated clockwise, the leading edge of document sheet 47 is placed on register sensor 52 through feed roller 48 and feeding roller 49, register sensor 52 senses document sheet 47, and stops stepping motor 31. In this state, if the mode is converted into the fine mode, stepping motor 31 is rotated counterclockwise as shown in FIG. 6. Here, power transmission gear 32 connected to the gear of stepping motor 31 is rotated clockwise, and spring clutch 37, which winds round hub 32b and cylinder 36a, used in the fine mode, counterclockwise, is tightened. By doing so, gear 36 is rotated clockwise and first idle gear 42 engaged with gear 36 is rotated counterclockwise.

It will be appreciated that the normal mode may be used to deliver the document sheet to the reader at which point the fine, or slower mode, is used to pass the document over the reader. Foe example, in order to speed up the document feeding speed to the reading device even in the fine mode initially, the driving motor can be rotated at the revolution rate of the normal state. Then, when the register sensor installed in front of the reading device senses a document, the normal state is converted into the fine mode to transfer drive from the motor.

Fourth idle gear 55 engaged with first idle gear 42 is rotated clockwise, second idle gear 43 is rotated counterclockwise, and feeding gear 41 located thereon is rotated clockwise so as to convey document sheet 47 from feeding roller 49.

Here, document sheet 47 passes feeding roller 49 and the passed sheet is read by reading device 51. The document is then carried to delivery roller 50. Simultaneously, third idle gear 44 engaged with the smaller gear of feeding gear 41 is rotated counterclockwise, and delivery gear 45 engaged with gear 44 is rotated clockwise, to eject document sheet 47 from delivery roller 50.

Pick-up roller 40 and reduction gear 38 are rotated clockwise owing to idle gear 39 being engaged with the larger gear of feeding gear 41. Gear 33 engaged with reduction gear 38 idles counterclockwise. That is, since spring clutch 35 set on cylinder 33a of gear 33 is wound clockwise, gear 33 rotates to release hub 32a of power transmission gear 32. Thus, gear 33 used for the normal mode idles.

In the present invention, the stepping motor is rotated clockwise or counterclockwise at the same revolution rate. Accordingly, since the optimum revolution rate of the motor is maintained in any mode, it is possible to reduce noise and resonance frequency due to mechanical abrasion and vibration. Therefore, the mechanical arrangement is optimized and resolution deterioration and jitter are alleviated.

## Claims

1. A document feeding apparatus comprising:
at least one roller (16, 17, 18, 48,49, 49a, 50, 50a) for conveying sheets (15,47) of a document;
a motor gear (1, 31) for providing drive to rotate the roller (16, 17, 18, 48, 49, 49a, 50, 50a); and
characterised by
a gear system adapted to transmit drive from the motor gear rotating at a substantially constant speed to the roller (16, 17, 18, 48, 49, 49a, 50, 50a) and to cause the roller (16, 17, 18, 48, 49, 49a, 50, 50a) to rotate at one of two or more speeds whereby the speed of rotation of the roller depends on the direction of rotation of the motor gear.

2. Apparatus according claim 1, in which two drive paths are provided through which drive is transmitted to the roller (16, 17, 18, 48, 49, 49a, 50, 50a),
whereby when the motor gear rotates in a given direction one of these drive paths is selected to transmit drive and when the motor gear rotates in the opposite direction the other of the drive paths is selected to transmit drive, the speed of rotation of the roller depending on which of the drive paths is selected.

3. Apparatus according to claim 1 or 2, in which each drive path comprises at least one reduction gear (6, 8, 13) which is engaged to transmit drive when that drive path is selected.

4. Apparatus according to claim 1, 2 or 3 comprising two or more rollers (16, 17, 18, 48, 49, 49a, 50, 50a) for conveying document sheets (15, 47), each roller being driven by the motor gear.

5. Apparatus according to claim 4, in which a pick up roller and a first feeder roller for delivering a sheet to a read position are driven by the motor gear.

6. Apparatus according to claim 4 or 5, in which a delivery roller for conveying a sheet from the read position is driven by motor gear.

7. Apparatus according to any of claims 2 to 6, in which the gear system comprises a swing gear (4) arranged to swing between two drive positions in each of which a drive path is selected and in which the swing gear (4) can transmit drive along the selected drive path.

8. Apparatus according to claim 7, in which the swing gear acts upon differently sized reduction gears (6, 13) in different drive positions.

9. Apparatus according to claim 7 or 8, in which the swing gear (4) moves to one drive position or another depending upon the direction of the tangential force of revolution of the motor gear (1).

10. Apparatus according to any of claim 9, in which the swing gear (4) is pivotally mounted on a gear (2) driving it so that it is caused to move to one or other of the drive positions depending on the direction of rotation and hence the tangential force developed on that gear (2).

11. Apparatus according to any of claims 7 to 10, in which the swing gear is arranged so that a tension spring (5) positioned on a swing arm (3) pivoting the swing gear causes the swing gear (4) to be positioned between drive positions in an initial state when the motor gear (1) is not rotating.

12. Apparatus according to any of claims 7 to 11, in which the swing gear (4) engages with a two stage reduction gear (2) which receives power from the motor gear.

13. Apparatus according to any of claims 7 to 12, in which one of the gears of a first two-stage reduction gear (6) engages with and is driven by the swing gear in one drive position and the other of the gears of the first two-stage reduction gear (6) engages with a pick-up gear for driving a pick up roller for picking up a document sheet (15).

14. Apparatus according to claim 12, in which the pick-up gear (7) engages with one of the gears of a second two-stage reduction gear (8) and the other of the gears of the second two-stage reduction gear (8) engages with a feeding gear for driving a feed roller.

15. Apparatus according to claim 14, in which one of the gears of the second two-stage second reduction gear (8) engages with an idle gear (10) for transmitting drive to a delivery roller (18).

16. Apparatus according to claim 15, in which a side of the idle gear (10) engages with a second idle gear (12) which engages and drives the delivery roller (18).

17. Apparatus according to claim 15, in which another side of the idle gear (10) transmits drive to one or more further idle gears (11, 13) in this drive position.

18. Apparatus according to any of claims 7 to 17 comprising a stepping motor and wherein, when the stepping motor rotates clockwise, the two-stage reduction gear (2) rotates counterclockwise and moves the swing gear upward to engage with the first reduction gear (6), when the stepping motor rotates counterclockwise, the two-stage reduction gear (2) rotates clockwise and moves the swing gear downward to engage with the third reduction gear (13).

19. Apparatus according to any of claims 2 to 6, in which the gear system comprises one or more clutches arranged so that one or other of the drive paths is selected for driving the roller depending on the direction of rotation of the motor gear.

20. Apparatus according to claim 19, in which one or more spring clutches are provided.

21. Apparatus according to claim 19 or 20, in which the one or more clutches causes differently sized reduction gears to be engaged depending on the drive path selected.

22. Apparatus according to claim 19, 20 or 21, in which a power transmission gear (32) having spring clutches positioned either side thereof is provided and the drive path selected depends on the direction of rotation of the gear (32).

23. Apparatus according to claim 22, in which a gear (33) used in a normal mode is set on one side of the power transmission gear (32) delivering power from the motor gear (1), a gear (36) used in a fine mode is set on the other side of the power transmission gear (32), the gear used for normal mode being driven when the motor gear rotates one way, the gear used for fine mode being driven when the stepping motor rotates the other way.

24. Apparatus according to claim 23, in which the two gears (33, 36) are differently sized from one another and/or further gears (38, 39, 42, 55, 43) are provided which are of differing sizes from one drive path to the other.

25. Apparatus as claimed in claim 23 or 24, in which the gear (32) comprises two hubs (32a, 32b) one on either side which rotate with the clutch gear, and in which two gears (33, 36) having hubs (33a, 36a) are provided positioned rotatably opposite the respective transmission gear hubs (32a, 32b), two spring clutches (35, 37) being positioned about each pair of opposing hubs (32a, 33a and 32b, 36a) the spring clutches being wound in the directions different from each other, so that power is delivered to one of the two gears (33, 36) according to the revolution direction of the power transmission gear, two gears (33, 36) and the spring clutches whilst the other gear is idle, and vice versa so that drive is transmitted through one or other of the two gears (33, 36)

26. Apparatus according to claim 22, 23 or 24, in which one of the gears (33) engages with a two-stage reduction gear (38).

27. Apparatus according to claim 26, in which one of the gears of the two-stage reduction gear (38) is engaged with an idle gear (39) which engages with a pick-up gear for driving a feed roller for picking up a document sheet (47).

28. Apparatus according to claim 27, in which one side of the idle gear (39) engages with a feeding gear on which a feeding roller is set.

29. Apparatus according to claim 26, 27 or 28, in which another of the two gears (36) engages with a first idle gear (42) which engages a fourth idle gear (55).

30. Apparatus according to claim 29, in which the fourth idle gear (55) engages a second idle gear (43) a side of which engages one gear of a two-stage reduction feeding gear (41), the other gear of feeding gear (41) engaging with a third idle gear (44) for driving a delivery roller.

31. Apparatus according to any of claims 25 to 30, comprising a stepping motor and when it rotates one way, the spring clutch set on one hub of the power transmission gear (32) delivers power to the gear used for normal mode, and the spring clutch set on the other hub is released so that power is not delivered to the gear used for fine mode, the gear used for fine mode being idle.

32. Apparatus according to claim 31, in which, when the stepping motor rotates the other way, the spring clutch set on the other hub of the power transmission gear (32) delivers power to the gear used for fine mode, and the spring clutch set on one hub is released so that power is not delivered to the gear used for normal mode, the gear used for normal mode being idle.

33. Apparatus according any preceding claim, in which to speed up the document feeding speed to a read position in a high resolution mode, the motor gear is rotated at a first high speed until a document reaches the read position where a sensor determines the document has reached the reading position and the motor gear is then reversed so that the document is read at a second lower speed.

34. Apparatus according to any preceding claim, in which the stepping motor rotates clockwise or counterclockwise at the same revolution rate.

35. A facsimile system comprising a document feeding apparatus for transmitting data from a document according to any preceding claim comprising:
a feed roller for feeding sheets of a document;
a document sensor for sensing if the document sheet is loaded;
a reading device for reading the data of the document and for converting the data into a digital signal;
a feeding roller for feeding the document sheet to the reading device;
and a register sensor located before the reading device,
whereby the document sheet is conveyed by the power transmission gear system by driving a driving motor gear clockwise or counterclockwise at a constant revolution rate in each document speed transmission mode.

36. A facsimile system according to claim 35, in which a reading device is located between the feeding roller and delivery roller, a register sensor is set in front of the reading device, a friction pad and document sensor are set on the feed roller.

37. A facsimile according to claim 35 or 36, in which to speed up the document feeding speed to the reading device even in the initial fine mode, the driving motor is rotated at the revolution rate of the normal state, the register sensor installed in front of the reading device is operated, and then the normal state is converted into the fine mode, to drive the motor.

38. A document feeding apparatus substantially as described herein with reference to and/or as illustrated in FIGS 1 to 3 or 4 to 7B.

39. A facsimile apparatus substantially as described herein with reference to and/or as illustrated in FIGS 1 to 3 or 4 to 7B.
